# EUROPÄISCHE PATENTSCHRIFT

(11) **EP 0 928 551 B1**
(45) Veröffentlichungstag und Bekanntmachung des Hinweises auf die Patenterteilung: **30.01.2002**
(21) Anmeldenummer: 97943739.9
(22) Anmeldetag: 08.09.1997
(51) Int. Cl.: H04Q 7/38

(54) **VERFAHREN FÜR EINE DECT-BASISSTATION UND EIN DECT-MOBILTEIL ZUR IDENTIFIZIERUNG DES DECT-MOBILTEILS**
METHOD OF OPERATING A DECT BASE STATION AND A DECT MOBILE PART FOR IDENTIFYING THE DECT MOBILE PART
PROCEDE POUR UNE STATION DE BASE DECT ET UNE PARTIE MOBILE DECT POUR IDENTIFIER LA PARTIE MOBILE

(30) Priorität: 27.09.1996 DE 19640008
(43) Veröffentlichungstag der Anmeldung: 14.07.1999
(73) Patentinhaber: SIEMENS AKTIENGESELLSCHAFT, 80333 München (DE)
(72) Erfinder: SCHMITZ, Georg, D-46395 Bocholt (DE); KAMPERSCHROER, Erich, D-46499 Hamminkeln (DE)
(86) Internationale Anmeldenummer: DE9701985
(87) Internationale Veröffentlichungsnummer: WO9813955

(56) Entgegenhaltungen:
- EP-A- 0 618 745
- SUDARSHAN RAO ET AL: "INTERWORKING BETWEEN DIGITAL EUROPEAN CORDLESS TELECOMMUNICATIONS AND A DISTRIBUTED PACKET SWITCH" WIRELESS NETWORKS, Bd. 1, Nr. 1, 1.Februar 1995, Seiten 83-93, XP000503722

## Beschreibung

Die Erfindung betrifft ein Verfahren für eine DECT-Basisstation und ein DECT-Mobilteil gemäß dem Oberbegriff der Patentansprüche 1, 2 oder 3.

Insbesondere auf dem endgerätenahen Gebiet der Telekommunikation gewinnen Funkstrecken zunehmend an Bedeutung. Schnurlos-Telefone, Mobilfunkendgeräte und die drahtlose Anschlusstechnik "radio in the local loop" sind dafür bekannte Beispiele. Mit dem Ziel einen Standard für eine hochleistungsfähige und universelle Luftschnittstelle festzulegen, wurde auf Betreiben europäischer Unternehmen eine als "DECT" (Digital European Cordless Telecommunication) bekannte Luftschnittstelle definiert. Der DECT-Standard ist in den Dokumenten ETS (European Telecommunication Standard) 300 175-1,...,9, Oktober 1992 des ETSI (European Telecommunication Standard Institute) beschrieben und aus diesem bekannt.

Ein DECT-System erlaubt maximal 120 simultane Verbindungen zwischen sogenannten Basisstationen und Mobilteilen, wobei maximal 10 Frequenzen zwischen 1,88 und 1,90 GHz zur Verfügung stehen und pro Frequenz maximal 12 gleichzeitige Verbindungen realisierbar sind. Als Mobilteil werden i.ü. nicht nur mobile Endgeräte sondern wie z.B. bei der drahtlosen Anschlusstechnik "radio in the local loop" auch stationäre, mit einer Basisstation über die Luftschnittstelle korrespondierende Systemkomponenten verstanden, die den Funktionsumfang eines Mobilteil beinhalten.

Die Tatsache, daß von einer Basisstation, selbst wenn sie nur eine Frequenz belegt, gleichzeitig zu 12 Mobilteilen Verbindungen bestehen können, macht deutlich, das bei der Luftschnittstelle Maßnahmen vorgesehen sein müssen, die aus der Sicht der Basisstation eine Unterscheidung, insbesondere eine Selektierung bzw. Identifizierung, der einzelnen Mobilteile ermöglicht.

Nach dem DECT-Standard muß sich deshalb jedes Mobilteil, das in Kontakt mit einer Basisstation treten will, zuerst in Form einer Anmeldeanforderung bei der Basisstation anmelden. Mit dieser Anmeldeanforderung übermittelt das Mobilteil zu seiner Identifizierung eine geräteindividuelle Benutzerkennung, die vom Hersteller des Mobilteils in diesem unveränderbar hinterlegt wurde und die weltweit einzig ist. Für den Fall, das die Basisstation die Anmeldung des Mobilteils akzeptiert, wird dem Mobilteil eine systemindividuelle Benutzerkennung zugewiesen.

Allein unter dieser systemindividuellen Benutzerkennung erfolgt im Weiteren eine Selektierung und Identifizierung des Mobilteils. Zum Einen wird das Mobilteil von der Basisstation unter dieser systemindividuellen Benutzerkennung angesprochen, und zum Anderen meldet sich das Mobilteil bei der Basisstation unter dieser systemindividuellen Benutzerkennung.

In einer Datenbasis der Basisstation wird für das angemeldete Mobilteil ein zur Hinterlegung von mobilteilbezogenen Daten dienender Anmeldeplatzspeicher eingerichtet, als dessen logische Adresse die systemindividuelle Benutzerkennung verwendet wird, d.h., daß der für ein jeweiliges Mobilteil eingerichtete Anmeldeplatzspeicher anhand der systemindividuellen Benutzerkennung ermittelt bzw. angesprochen wird.

Soll der Kontakt zur Basisstation abgebrochen werden, wird von dem Mobilteil eine Freigabemeldung übermittelt und in der Datenbasis wird der für das Mobilteil eingerichtete Anmeldeplatzspeicher zur anderweitigen Verwendung wieder freigegeben.

Wird jedoch das Mobilteil, z.B. durch seinen Benutzer, veranlaßt, eine Anmeldeanforderung an die Basisstation zu übertragen, obwohl der Kontakt zur Basisstation noch besteht - also nicht mittels einer Freigabemeldung abgebrochen wurde - und damit noch ein Anmeldeplatzspeicher für das Mobilteil eingerichtet ist, wird das Vorhandensein des dem Mobilteil zugeordneten Anmeldeplatzspeichers nicht erkannt. Wie bei der Erstanmeldung wird eine - neue - systemindividuelle Benutzerkennung dem Mobilteil zugewiesen, und ein 'neuer' Anmeldeplatzspeicher wird in der Datenbasis eingerichtet. Die Speicherkapazität der Datenbasis kann durch eine Mehrzahl derartiger "Wiederanmeldungen" von Mobilteilen schnell erschöpft sein, wodurch eine Blockierung der Datenbasis erfolgt.

Aufgabe der vorliegenden Erfindung ist es, ausgehend von einem Verfahren gemäß den Merkmalen des Oberbegriffs der Patentansprüche 1, 2 oder 3 Maßnahmen vorzusehen, mit denen eine Blockierung der Datenbasis auf Grund von Wiederanmeldungen verhindert werden kann.

Gelöst wird diese Aufgabe erfindungsgemäß durch die kennzeichnenden Merkmale des nebengeordneten Anspruchs 1, bzw. 2, bzw. 3.

Das Problem warum bei einer "Wiederanmeldung" eines Mobilteils ein bereits für das Mobilteil eingerichteter Anmeldeplatzspeicher nicht aufgefunden wird, besteht deshalb, weil die Anmeldung des Mobilteils nur mittels der geräteindividuellen Benutzerkennung erfolgt, und in der Datenbasis nach Zuweisung der systemindividuellen Benutzerkennung die ursprünglich im Rahmen der Anmeldeanforderung übermittelte geräteindividuelle Benutzerkennung nicht gespeichert wird.

Anhand der Zeichnung werden im Folgenden zu jeder der drei in den Ansprüchen definierten Alternativen jeweils ein Ausführungsbeispiel der Erfindung näher erläutert. Dabei zeigen
- FIG 1: eine symbolische Darstellung von Anmeldeplatzspeichern in einer Datenbasis für ein erfindungsgemäßes Verfahren nach Patentanspruch 1
- FIG 2: ein DECT-Anreizdiagramm entsprechend einem erfindungsgemäßen Verfahren nach Patentanspruch 2
- FIG 3: ein DECT-Anreizdiagramm entsprechend einem erfindungsgemäßen Verfahren nach Patentanspruch 3.

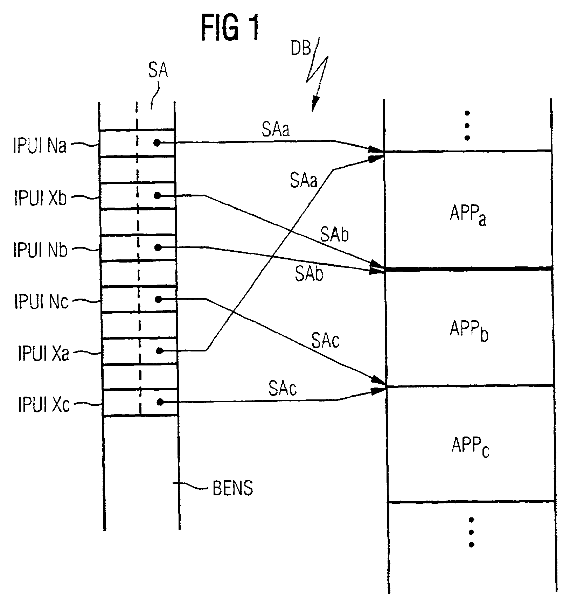

In FIG 1 sind in symbolischer Weise drei Mobilteilen a,b,c (nicht dargestellt) zugeordnete Anmeldeplatzspeicher APPa,b,c und ein Benutzerkennungsspeicher BENS einer Datenbasis DB in einer DECT-Basisstation (nicht dargestellt) dargestellt. Ein Anmeldeplatzspeicher wird von einer DECT-Basisstation (im Weiteren Basisstation genannt) für jedes DECT-Mobilteil (im Weiteren Mobilteil genannt) eingerichtet, das bei der Basisstation angemeldet und von dieser als potentieller Verbindungspartner akzeptiert wurde.

Ein späterer Verbindungsaufbau zwischen Basisstation und Mobilteil ist nur möglich, wenn das Mobilteil bei der Basisstation ordnungsgemäß angemeldet und registriert ist.

Der DECT-Standard (insbesondere ETS 300 175-5; 6.3.6.3) sieht für eine Anmeldung eines Mobilteiles bei einer Basisstation eine Anmeldeprozedur vor, bei der eine Anmeldeanforderung (Access-Rights-Request) mit einer geräteindividuellen Benutzerkennung IPUI N (International Portable User Identity)-die vom Mobilteilhersteller im Mobilteil hinterlegt ist-(vergleiche insbesondere ETS 300 175-6; 6.2.1.) von dem Mobilteil an die Basisstation übermittelt wird.

Von der Basisstation wird auf Grund der Anmeldeanforderung-sofern einer Registrierung des Mobilteiles keine Gründe entgegenstehen - eine systemindividuelle Benutzerkennung IPUI X (X für S;O;T;P,Q;U;R) ermittelt (vergleiche insbesondere ETS 300 175-6; 6.2.1. bis 6.2.8.) und mit einer Bestätigungsmeldung (Access-Rights-Accept; vergleiche insbesondere ETS 300 175-5; 6.3.6.1.) an das die Anmeldung veranlassende Mobilteil zurückübermittelt.

Das Mobilteil speichert die systemindividuelle Benutzerkennung IPUI X als aktuelle Benutzerkennung, unter der es sich im Weiteren, also z.B. für den Aufbau einer Gesprächsverbindung bei der Basisstation melden muß und unter der es von der Basisstation Meldungen erwartet. Die geräteindividuelle Benutzerkennung IPUI N kommt im Weiteren - mit Ausnahme bei einer Anmeldeanforderung - nicht mehr zur Geltung.

Die Anmeldeplatzspeicher APPa,b,c sind in der Datenbasis DB über den Benutzerkennungsspeicher BENS adressierbar. In dem Benutzerkennungsspeicher BENS sind die systemindividuellen Benutzerkennungen IPUI X enthalten und einer physikalischen Speicheradresse SA zur Adressierung des zugehörigen Anmeldeplatzspeichers APP zugeordnet. Außerdem sind in dem Benutzerkennungsspeicher BENS auch die geräteindividuellen Benutzerkennungen IPUI N gespeichert, die bei den Anmeldeanforderungen an die Basisstation übermittelt wurden. Ebenso wie den geräteindividuellen Benutzerkennungen ist den systemindividuellen Benutzerkennungen jeweils eine physikalische Speicheradresse SA zugeordnet, wobei die der systemindividuellen Benutzerkennung und der für das gleiche Mobilteil zugeordneten physikalischen Speicheradressen SA identisch sind.

Basierend auf dieser zusätzlichen Speicherung der geräteindividuellen Benutzerkennungen läßt sich ein Arbeitsspeicher auch unter der geräteindividuellen Benutzerkennung auffinden. Dem entsprechend wird bei einer Anmeldeanforderung eines Mobilteils c von der Basisstation zunächst überprüft, ob die im Zuge der Anmeldeanforderung übermittelte geräteindividuelle Benutzerkennung IPUI Nc in dem Benutzerkennungsspeicher BENS enthalten ist. Ist dies nicht der Fall, wird ein neuer Anmeldeplatzspeicher APPc für das Mobilteil vorbereitet und in dem Benutzerkennungsspeicher BEMS die gerateindividuelle Benutzerkennung IPUI Nc in Verbindung mit der physikalischen Speicheradresse SAc des vorbereiteten Anmeldeplatzspeichers APPc gespeichert. Außerdem wird die auf Grund der Anmeldeanforderung ermittelte systemindividuelle Benutzerkennung IPUI Xc in dem Benutzerkennungsspeicher BENS zusammen mit der gleichen physikalischen Speicheradresse SAc des vorbereiteten Anmeldeplatzspeichers APPc eingespeichert.

Mit der durch den Benutzerkennungsspeicher BENS möglichen indirekten Adressierung der Anmeldeplatzspeicher APP in der Datenbasis DB und der zusätzlichen Speicherung der geräteindividuellen Benutzerkennungen ist es ohne weiteres möglich, daß bei einer Neuanmeldung eines Mobilteils c, das noch angemeldet ist und für das ein Anmeldeplatzspeicher APPc in der Datenbasis DB bereits eingerichtet ist, diese Tatsache anhand der im Zuge der Anmeldeanforderung übermittelten geräteindividuellen Benutzerkennung IPUI Nc und einer Suche nach dieser in dem Benutzerkennungsspeicher BENS sofort erkannt wird. Eine Bereitstellung eines neuen Anmeldeplatzspeichers APP kann bei einem bereits eingerichteten Anmeldeplatzspeicher APPc für das betreffende Mobilteil c entfallen.

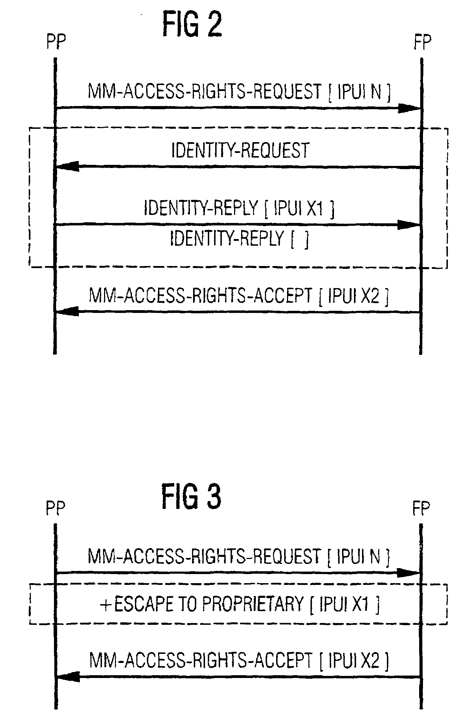

FIG 2 zeigt ein Anreizdiagramm - für ein Ausführungsbeispiel eines erfindungsgemäßen Verfahrens nach Patentanspruch 2-zur Veranschaulichung von im Rahmen einer Anmeldeprozedur vorgesehenen DECT-Meldungen zwischen einem Mobilteil PP (portable part)und einer Basisstation FP (fixed part).

Eine Anmeldeanforderung (MM-Access-Rights-Request[IPUI N], vergleiche insbesondere ETS 300 175-5; 6.3.6.3.) wird in herkömmlicher Weise von dem Mobilteil PP an eine Basisstation FP übermittelt. Diese Anmeldeanforderung beinhaltet - wie im DECT-Standard festgelegt - die geräteindividuelle Benutzerkennung IPUI N. Da die Basisstation FP wegen der ausschließlichen Adressierbarkeit der Anmeldeplatzspeicher über die systemindividuellen Benutzerkennungen anhand der geräteindividuellen Benutzerkennung IPUI N nicht erkennen kann, ob bereits ein Anmeldeplatzspeicher APP in der Datenbasis für das betreffende Mobilteil PP eingerichtet ist, übermittelt es an das Mobilteil PP eine Identitätsanforderung (Identity-Request; vergleiche insbesondere ETS 300 175-5; 6.3.6.15 und 13.2.1) mit der das Mobilteil PP aufgefordert wird, eine ihm gegebenenfalls im Vorhergehenden, z.B. im Rahmen einer Anmeldeanforderung, übermittelte systemindividuelle Benutzerkennung IPUI X an die Basisstation FP zurückzuübermitteln.

Diese Rückübermittlung (Identity-Reply; vergleiche insbesondere ETS 300 175-5; 6.3.6.14) erfolgt ohne Benutzerkennung, wenn dem Mobilteil PP im Vorhergehenden keine systemindividuelle Benutzerkennung IPUI X übermittelt wurde. Anderenfalls wird bei der Rückübermittlung die systemindividuelle Benutzerkennung IPUI X1 an die Basisstation FP übermittelt.

Anhand dieser systemindividuellen Benutzerkennung IPUI X1 kann die Basisstation FP dann überprüfen, ob bereits ein Anmeldeplatzspeicher für das betreffende Mobilteil PP vorhanden ist, oder ein neuer Anmeldeplatzspeicher eingerichtet werden muß. In der Regel wird bei jeder Anmeldung eine - neu - ermittelte systemindividuelle Benutzerkennung IPUI X2 an das Mobilteil PP in Form einer DECT-Meldung (MM-Access-Rights-Accept; vergleiche insbesondere ETS 300 175-55; 6.3.6.1) zurückübermittelt. Diese systemindividuelle Benutzerkennung IPUI X2 ist nunmehr die aktuelle Benutzerkennung unter der sich das Mobilteil FP meldet, unter der es angesprochen wird und unter der ein Anmeldeplatzspeicher in der Datenbasis DB angesprochen wird.

In FIG 3 ist ein Anreizdiagramm für ein Ausführungsbeispiel eines erfindungsgemäßen Verfahrens nach Patentanspruch 3 dargestellt, das den Meldungsaustausch bei einer Anmeldung zwischen einem Mobilteil PP und einer Basisstation FP veranschaulicht. Die Anmeldeanforderung erfolgt in der vorstehend bereits erläuterten Weise durch Übermittlung einer Anmeldeanforderung (MM-Access-Rights-Request), die nach DECT-Standard die geräteindividuelle Benutzerkennung IPUI N beinhaltet. Im Weiteren wird von der Mobilteil PP eine gegebenenfalls bereits vergebene systemindividuelle Benutzerkennung IPUI X1 in Form eines sogenannten proprietären Informationselementes an die Basisstation FP übertragen. Dafür sieht der DECT-Standard eine entsprechende Meldung (Escape-to-Proprietary) vor (vergleiche insbesondere ETS 300 175-5; 7.7.1 und ETS 300 175-3; 7.2.3.1, 7.3.8 und 12.8 außerdem ETS 300 175-1; 8.1 und 8.2).

Anhand der mittels eines proprietären Informationselementes übermittelten systemindividuellen Benutzerkennung IPUI X1 kann die Basisstation FP dann feststellen, ob in der Datenbasis bereits ein Anmeldeplatzspeicher für das betreffende Mobilteil vorhanden ist, oder ob ein neuer Anmeldeplatzspeicher eingerichtet werden muß. In üblicher Weise wird zur Bestätigung der Anmeldung eine - neu - ermittelte systemindividuelle Benutzerkennung IPUI X2 an das Mobilteil PP im Rahmen einer Bestätigungsmeldung (MM-Access-Rights-Accept; vergleiche insbesondere ETS 300 175-5; 6.3.6.1) zurückübermittelt.

## Patentansprüche

1. Verfahren für eine DECT-Basisstation (FP) und ein DECT-Mobilteil (PP) zur Identifizierung des DECT-Mobilteiles (PP), von dem im Zuge einer Anmeldeanforderung eine geräteindividuelle Benutzerkennung (IPUI N) an die DECT-Basisstation (FP) übermittelt wird, worauf in einer der DECT-Basisstation (FP) zugeordneten Datenbasis (DB) ein dem DECT-Mobilteil (PP) zugeordneter Anmeldeplatzspeicher (APP) eingerichtet und für das DECT-Mobilteil (PP) eine systemindividuelle Benutzerkennung (IPUI X) ermittelt wird, die dem Anmeldeplatzspeicher (APP) zugeordnet abgespeichert und an das DECT-Mobilteil (PP) zurückübermittelt wird, wobei im Weiteren eine Selektierung und eine Identifizierung des Mobilteils (PP) anhand der systemindividuellen Benutzerkennung (IPUI X) erfolgt, **dadurch gekennzeichnet,**
**daß** zusätzlich zur systemindividuellen Benutzerkennung (IPUI X) die geräteindividuelle Benutzerkennung (IPUI N) dem Anmeldeplatzspeicher (APP) zugeordnet abgespeichert wird und
**daß** bei Anmeldeanforderungen von DECT-Basisstationen (FP) jeweils anhand der übermittelten geräteindividuellen Benutzerkennung (IPUI N) die Datenbasis (DB) auf das Vorhandensein eines das jeweilige DECT-Mobilteil (PP) betreffenden Anmeldeplatzspeichers (APP) überprüft wird.

2. Verfahren für eine DECT-Basisstation (FP) und ein DECT-Mobilteil (PP) zur Identifizierung des DECT-Mobilteiles (PP), von dem im Zuge einer Anmeldeanforderung eine geräteindividuelle Benutzerkennung (IPUI N) an die DECT-Basisstation (FP) übermittelt wird, worauf in einer der DECT-Basisstation (FP) zugeordneten Datenbasis (DB) ein dem DECT-Mobilteil (PP) zugeordneter Anmeldeplatzspeicher (APP) eingerichtet und für das DECT-Mobilteil (PP) eine systemindividuelle Benutzerkennung (IPUI X) ermittelt wird, die dem Anmeldeplatzspeicher (APP) zugeordnet abgespeichert und an das DECT-Mobilteil (PP) zurückübermittelt wird, wobei im Weiteren eine Selektierung und eine Identifizierung des Mobilteils (PP) anhand der systemindividuellen Benutzerkennung (IPUI X) erfolgt, **dadurch gekennzeichnet,**
**daß** nach Empfang einer Anmeldeanforderung eine Identifizierungsanforderung zur Rückübermittlung einer gegebenenfalls im Vorhergehenden an das DECT-Mobilteil (PP) übertragenen systemindividuellen Benutzerkennung (IPUI X) an das DECT-Mobilteil (PP) übermittelt wird und
**daß** die Datenbasis (DB) anhand der rückübermittelten systemindividuellen Benutzerkennung (IPUI X) auf das Vorhandensein eines das DECT-Mobilteil (PP) betreffenden Anmeldeplatzspeichers (APP) überprüft wird.

3. Verfahren für eine DECT-Basisstation (FP) und ein DECT-Mobilteil (PP) zur Identifizierung des DECT-Mobilteiles (PP), von dem im Zuge einer Anmeldeanforderung eine geräteindividuelle Benutzerkennung (IPUI N) an die DECT-Basisstation (FP) übermittelt wird, worauf in einer der DECT-Basisstation (FP) zugeordneten Datenbasis (DB) ein dem DECT-Mobilteil (PP) zugeordneter Anmeldeplatzspeicher (APP) eingerichtet und für das DECT-Mobilteil (PP) eine systemindividuelle Benutzerkennung (IPUI X) ermittelt wird, die dem Anmeldeplatzspeicher (APP) zugeordnet abgespeichert und an das DECT-Mobilteil (PP) zurückübermittelt wird, wobei im Weiteren eine Selektierung und eine Identifizierung des Mobilteils (PP) anhand der systemindividuellen Benutzerkennung (IPUI X) erfolgt, **dadurch gekennzeichnet,**
**daß** im Zuge einer Anmeldeanforderung vom DECT-Mobilteil (FP) zusätzlich eine gegebenenfalls im Vorhergehenden an das DECT-Mobilteil (PP) übertragene systemindividuelle Benutzerkennung (IPUI X) übermittelt wird und
**daß** die Datenbasis (DB) anhand der übertragenen systemindividuellen Benutzerkennung (IPUI X) auf das Vorhandensein eines das DECT-Mobilteil (PP) betreffenden Anmeldeplatzspeichers (APP) überprüft wird.

## Claims

1. Method for a DECT base station (FP) and a DECT mobile part (PP) for identifying the DECT mobile part (PP), from which an equipment-unit-specific user identifier (IPUI N) is transferred to the DECT base station (FP) in the course of an application request, an application location memory (APP) which is assigned to the DECT mobile part (PP) being subsequently set up in a database (DB) assigned to the DECT base station (FP) and a system-specific user identifier (IPUI X) being determined for the DECT mobile part (PP), said user identifier (IPUI X) being stored in assignment to the application location memory (APP) and transferred back to the DECT mobile part (PP), and the mobile part (PP) then being selected and identified by reference to the system-specific user identifier (IPUI X), **characterized in that**, in addition to the system-specific user identifier (IPUI X), the equipment unit-specific user identifier (IPUI N) is stored in assignment to the application location memory (APP), and **in that**, when there are application requests by DECT base stations (FP) the database (DB) is checked for the presence of an application location memory (APP) relating to the respective DECT mobile part (PP), in each case by reference to the transferred equipment unit-specific user identifier (IPUI N).

2. Method for a DECT base station (FP) and a DECT mobile part (PP) for identifying the DECT mobile part (PP), from which an equipment unit-specific user identifier (IPUI N) is transferred to the DECT base station (FP) in the course of an application request, an application location memory (APP) which is assigned to the DECT mobile part (PP) being subsequently set up in a database (DB) assigned to the DECT base station (FP) and a system-specific user identifier (IPUI X) being determined for the DECT mobile part (PP), said user identifier (IPUI X) being stored in assignment to the application location memory (APP) and transferred back to the DECT mobile part (PP), and the mobile part (PP) then being selected and identified by reference to the system-specific user identifier (IPUI X), **characterized in that**, after reception of an application request, an identification request for transferring back a system-specific user identifier (IPUI X), possibly previously transmitted to the DECT mobile part (PP), is transferred to the DECT mobile part (PP), and
**in that** the database (DB) is checked for the presence of an application location memory (APP) relating to the DECT mobile part (PP) by reference to the system-specific user identifier (IPUI X) transferred back.

3. Method for a DECT base station (FP) and a DECT mobile part (PP) for identifying the DECT mobile part (PP), from which an equipment unit-specific user identifier (IPUI N) is transferred to the DECT base station (FP) in the course of an application request, an application location memory (APP) which is assigned to the DECT mobile part (PP) being subsequently set up in a database (DB) assigned to the DECT base station (FP) and a system-specific user identifier (IPUI X) being determined for the DECT mobile part (PP), said user identifier (IPUI X) being stored in assignment to the application location memory (APP) and transferred back to the DECT mobile part (PP), and the mobile part (PP) then being selected and identified by reference to the system-specific user identifier (IPUI X), **characterized in that**, in the course of an application request by the DECT mobile part (FP), in addition a system-specific user identifier (IPUI X) which has possibly previously been transmitted to the DECT mobile part (PP), is transferred, and **in that** the database (DB) is checked for the presence of an application location memory (APP) relating to the DECT mobile part (PP) by reference to the transmitted system-specific user identifier (IPUI X).

## Revendications

1. Procédé destiné à une station de base DECT (FP) et un poste mobile DECT (PP) pour l'identification du poste mobile DECT (PP), lequel envoie à la station de base DECT (FP), au cours d'une demande d'accès au réseau, un code d'utilisateur (IPUI N) spécifique à l'appareil, à la suite de quoi est aménagé, dans une base de données (DB) affectée à la station de base DECT (FP), un emplacement de mémoire d'enregistrement (APP), correspondant au poste mobile DECT (PP), et est déterminé, pour le poste mobile DECT (PP), un code d'utilisateur (IPUI X), spécifique au système, qui est mémorisé comme étant affecté à l'emplacement de mémoire d'enregistrement (APP) et qui est renvoyé au poste mobile DECT (PP), une sélection et une identification du poste mobile (PP) se faisant, par la suite, à l'aide du code d'utilisateur (IPUI X) spécifique au système,
**caractérisé par le fait**
**que**, en plus du code d'utilisateur (IPUI X) spécifique au système, le code d'utilisateur (IPUI N) spécifique à l'appareil est mémorisé comme étant affecté à l'emplacement de mémoire d'enregistrement (APP) et
**que**, lors de demandes d'accès au réseau, les stations de base DECT (FP) vérifient, dans chaque cas, à l'aide des codes d'utilisateur (IPUI N) spécifiques à l'appareil, qui ont été transmis, si la base de données (DB) renferme un emplacement de mémoire d'enregistrement (APP) concernant le poste mobile DECT (PP) respectif.

2. Procédé destiné à une station de base DECT (FP) et un poste mobile DECT (PP) pour l'identification du poste mobile DECT (PP), lequel envoie à la station de base DECT (FP), au cours d'une demande d'accès au réseau, un code d'utilisateur (IPUI N) spécifique à l'appareil, à la suite de quoi est aménagé, dans une base de données (DB) affectée à la station de base DECT (FP), un emplacement de mémoire d'enregistrement (APP), correspondant au poste mobile DECT (PP), et est déterminé, pour le poste mobile DECT (PP), un code d'utilisateur (IPUI X), spécifique au système, qui est mémorisé comme étant affecté à l'emplacement de mémoire d'enregistrement (APP) et qui est renvoyé au poste mobile DECT (PP), une sélection et une identification du poste mobile (PP) se faisant, par la suite, à l'aide du code d'utilisateur (IPUI X) spécifique au système,
**caractérisé par le fait**
**que**, après réception d'une demande d'accès au réseau, une demande d'identification est envoyée au poste mobile DECT (PP), destinée à transmettre en réponse un code d'utilisateur (IPUI X), spécifique au système, transmis, le cas échéant, dans ce qui a précédé, au poste mobile DECT (PP), et
**que** la base de données (DB) vérifie, à l'aide du code d'utilisateur (IPUI X), spécifique au système, transmis en réponse, s'il existe un emplacement de mémoire d'enregistrement (APP) concernant le poste mobile DECT (PP).

3. Procédé destiné à une station de base DECT (FP) et un poste mobile DECT (PP) pour l'identification du poste mobile DECT (PP), lequel envoie à la station de base DECT (FP), au cours d'une demande d'accès au réseau, un code d'utilisateur (IPUI N) spécifique à l'appareil, à la suite de quoi est aménagé, dans une base de données (DB) affectée à la station de base DECT (FP), un emplacement de mémoire d'enregistrement (APP), correspondant au poste mobile DECT (PP), et est déterminé, pour le poste mobile DECT (PP), un code d'utilisateur (IPUI X), spécifique au système, qui est mémorisé comme étant affecté à l'emplacement de mémoire d'enregistrement (APP) et qui est renvoyé au poste mobile DECT (PP), une sélection et une identification du poste mobile (PP) se faisant, par la suite, à l'aide du code d'utilisateur (IPUI X) spécifique au système,
**caractérisé par le fait**
**que**, à la suite d'une demande d'accès au réseau de la part du poste mobile DECT (PP), est envoyé, en plus, un code d'utilisateur (IPUI X), spécifique au système, transmis, le cas échéant dans ce qui a précédé, au poste mobile DECT (PP) et
**que** la base de données (DB) vérifie, à l'aide du code d'utilisateur (IPUI X), spécifique au système, qui a été transmis, s'il existe un emplacement de mémoire d'enregistrement (APP) concemant le poste mobile DECT (PP).
